# EUROPEAN PATENT SPECIFICATION

(11) **EP 0 620 965 B1**
(45) Date of publication and mention of the grant of the patent: **06.08.1997**
(21) Application number: 94870070.3
(22) Date of filing: 19.04.1994
(51) Int. Cl.: A01G 1/00

(54) **Growth mat of vegetable origin**
Wachstumsmatte aus pflanzlicher Herkunft
Natte de croissance d'origine végétale

(30) Priority: 21.04.1993 LK 2402; 03.06.1993 BE 9300563
(43) Date of publication of application: 26.10.1994
(73) Proprietor: COMPO BENELUX, 9800 Deinze (BE)
(72) Inventor: Aelbrecht, Jan, B-9700 Oudenaarde (BE)
(74) Representative: Vanderperre, Robert

(56) References cited:
- EP-A- 0 476 828
- WO-A-90/01254
- CH-A- 497 830
- US-A- 3 842 537

## Description

This invention concerns a method for soilless cultivation in the open air or in greenhouses on substrate mats which are kept separate from the subsoil. It relates also to a growth mat for use in soilless cultivation.

Substrate mats are used for the majority of tomatoes, cucumbers and paprikas which are cultivated in greenhouses.

Also cut flowers, such as roses, gerberas and carnations are being cultivated to a greater extent on mats. Up to now, mineral wool, glass wool, polyurethane, wood-fibre and peat are mainly used as the raw material for substrate mats.

WO-A-9001254 describes a substrate mat consisting of cocopeat sheets supplied in compressed form. The substrate mat is a lawn made of compressed coconut waste impregnated with selected seeds. The lawn is intented for laying lawns out on areas to be grassed.

EP-A-0 476 828 describes a slab of growth substrate having a thickness between 50 and 150 mm. The slabs are individually packaged in flexible envelopes of plastic material. The compression ratio of the slab is not mentioned. This document describes the use of a straw bag having in the direction of the width of the slab a dimension of about 1,5-3 times the width of the slab. This increased size is not convenient for transport of goods. In order to solve this problem, the present invention proposes as packaging a gusseted bag of flexible plastic material. The gusset is particularly appropriated in the present case because it allows, without any cost, a considerable increase of the thickness of the growth mat until four times the initial thickness. The drawbacks of the straw slabs disclosed by EP-A-0 476 828 are the following :
- Voluminosity so that the transport cost are still high ;
- swelling in width and not in height ;
- limited swelling of about 50%.

CH-A-409 already constitutes an artificial growth medium for the cultivation of plants. The medium consists of a coagulation of, on the one hand, particles of weak plastic which exhibit soil hydrology characteristics, and also contain air and nutrients, and on the other hand, particles of mineral origin.

This synthetic substrate based on polyurethane foam or polystyrene foam and mineral wool and/or vermiculite, perlite, punch stone must be disposed of or recycled after the cultivation. Both are expensive.

The use of an organic substrate such as peat has an adverse effect on the environment because it indirectly causes destruction of precious scenic areas.

Peat sheets and wood-fibre mats have the disadvantage that they decompose quickly, whereby the structure of the substrate changes after only a few months of cultivation. The pH value of wood-fibre mats quickly increases after cultivation commences whereby a substantial amount of nitrogen is fixated. Cocopeat, in its expanded, wet form, is already available in limited amounts on the market as a substrate for plant cultivation. This product is known by several names, i.e. coco-dust, "coir-fibre dust", "coir-fibre pitch" or cocopeat.

Cocopeat is the fine sieved material obtained from the husk of the coconut. This cocopeat is composed of granules of various diameters and small fibres.

Briquettes of compressed cocopeat are already imported from tropical countries where they are ground up and expanded so that they can be used as a substitute for potting composts.

The cocopeat briquettes which are imported into our country must however first be ground up and expanded by adding water before they are supplied. The transport, treatment and storage costs in countries are thus high.

The purpose of this invention is to eradicate these disadvantages by providing a method for soilless cultivation in the open air or in greenhouses on substrate mats which are kept separate from the subsoil. It relates also to a growth mat for use in soilless cultivation.

This aim can be achieved by using a substrate mat as growth medium in a method of soilless cultivation such as that described in the introductory text of conclusion 1. According to the invention, a characteristic of the method is that the substrate is composed of cocopeat sheets which are supplied in a compressed form.

A characteristic of the invention is that the growth medium is supplied as a substrate mat, in a compressed form at a pressure of 75-125 kg/cm², preferably at 95 kg/m² with the following dimensions: 97 x 20 x 1 cm.

According to an other version of the invention, the substrate is packed in folded polyethylene film which becomes tight when the cocopeat expands.

When the cocopeat is compressed at the pressures stated above, the growth medium possesses a volume of 500-600 g/litre with a residual humidity content of 15 to 20 g of water per 100g of dry substance.

These characteristics and other characteristics and details of the invention will be made clear from the following description, in particular from an example which shows a version of the invention in detail.

Cocopeat is a 100% organic material which is available in abundance as a by-product from the coconut production process. Despite the vegetal origin, the material decomposes extremely slowly when it is used as a growth medium due to its high lignin content. Cocopeat, in its expanded and wet form, has been available for a number of years on the market for soilless cultivation in the open-air or in greenhouses in pots which are separated from the subsoil.

The cocopeat sheets, which can be directly used in the hydroculture, are supplied in a compressed form. The cohesion of the material particles is provided by the material itself. It is not necessary to add an inorganic material, e.g. vermiculite, perlite or punch stone; and natural or synthetic glues are also not required.

The material of the dry growth medium possesses sufficient elasticity to withstand shocks and stresses encountered during the transportation and the treatment.

The growth mat, according to the invention, is supplied in compressed form at 75-125 kg/cm², preferably 95 kg/m², with specific dimensions which enable these mats to be laid out on profiled subsoil which is covered by plastic film, and these mats to be used in combination with the cultivation channels or cultivation troughs for which they are intended. Example of the dimensions are : 97 x 20 x 1 cm.

Moreover, the compressed sheets can be sawn in order to obtain intermediate sizes.

If required, the sheets are packed in polyethylene film. This film becomes tight when the cocopeat mat expands.

A binding agent is not used in order to ensure optimal air and soil hydrology and to eliminate phytotoxicity problems.

The nutrition for the plants is provided by watering the support or dripping onto the support, or by partial immersion of the support in channels which contain a nutrient solution.

A specific application of the growth cocopeat mat is the cultivation of tomatoes, cucumbers and paprikas under glass.

The cocopeat base material is dry sieved in order to obtain the part which is larger than 0.5 mm. This part is then mixed with 2 kg lime/m³. The mixture is weighed, emptied into a mould, and compressed in a dry state into sheets measuring 97 x 20 x 1 cm. The sheets are then wrapped, via lateral folding, in white PE-film which allows for expansion of the mat. The sheets are then stacked on a pallet which is then packed in a film equipped with cardboard protective edges which is wrapped around the pallet.

This packaging enables the cocopeat sheets to be stored and transported in a safe and inexpensive manner.

The nurseryman spreads out the cocopeat sheets on a white film. The holes for the plants in the white PE-film around the mat can be made beforehand, so that the dripping devices are inserted between the film and the sheet. Drops of nutrient solution are then allowed to fall onto the sheets so that they expand to their final shape, in this case, 105 x 22 x 5.5 cm. If the holes for the plants are made after the sheets have expanded to their final shape, the dripping devices must be inserted in "breeches" between the sheets and the film.

After a growth controlling period (for tomatoes), the plants which are cultivated in small mineral wool pots located beside the holes for the plants, can be positioned over the holes so that they can take root in the substrate.

It may be advantageous to use inexpensive peat pressing pots instead of mineral wool pots as the roobing more easily from peat to cocopeat than from rockwool to cocopeat.

When cocopeat is used, the plants quickly become firmly rooted so that they are able to withstand lateral forces when a tomato stem subsides; this is not the case for mats which are composed of wood-fibre.

The substance possesses adequate capillary characteristics to ensure the irrigation of the support. The property to fertilize is not to be neglected.

Nutrient solutions, pesticides, algicides, insecticides and antiseptics can be easily applied via the water circulation.

After the cultivation period has expired, the mats are removed from the greenhouse, the PE-film is cut open and the loose cocopeat material is disposed of into a container. As this material is still in optimal condition and contains many nutrients, it can be used with bark as an additive to prepare quality compost. It can also be used to organically improve the subsoil or as an additive for specific types of potting compost.

The physical and chemical characteristics of the growth mat can be easily adapted to satisfy the requirements of all cultures by selecting the size of the granules : the residual humidity content and the volume depend on the conditions under which the mat is compressed in each country of manufacture.

The compressed material rapidly absorbs water poured onto it and expands to retain this water in an efficient manner. The granules and the fibres form a network of numerous pores and channels which encourage the plants to take root. The expansion causes the volume of the growth mat to increase by a factor of 6, provided that the compressed volume was 600 g/l.

Upon reception of the sheet, the user does not have to grind the compressed sheet in order to obtain a usable growth medium.

When compared with conventional growth mats, the transportation, treating and storage costs of these mats are extremely low.

Cocopeat can be mixed in limited amounts with other organic substances (e.g. cocopeat-fibres, peat-fibres and wood-fibres, etc.) or with non-organic substances (e.g. perlite and vermiculite) whilst still retaining the typical characteristics such as the compressibility and expansion and the other advantages resulting from this.

## Claims

1. Method for soilless cultivation in the open air or in greenhouses on substrate mats which are kept separate from the subsoil, characterized in that growth mats of cocopeat sheets which are supplied in compressed form are used as said substrate mats.

2. Growth mat consisting of compressed cocopeat sheets for use in soilless cultivation, according to claim 1, characterized in that it is supplied as a substrate mat in compressed form at 75-125 kg/cm² with the dimensions of 97 x 20 x 1 cm in a dry state and that it has a final dimension of 105 x 22 x 5,5 cm in expanded state.

3. Growth mat, according to claim 2, which is characterized by the fact that it is packed in folded polyethylene film which becomes tight upon expansion of the cocopeat.

4. Growth mat, according to conclusion 2 or 3, which is characterized by the fact that it possesses a volume of 500-600 g/litre for a humidity content of 15 to 20 g of water/100 g dry substance.

5. Procedure for manufacturing a growth cocopeatmat according to claim 2, characterized in that the basic cocopeat material is dry-sieved, the part retained after the sieving process is larger than 0.5 mm, this part is mixed with 2 kg lime/m³ and specific quantity of this mixture is emptied into a mould where it is compressed under a pressure of 75-125 kg/cm² into sheets measuring 97 x 20 X 1 cm.

## Patentansprüche

1. Methode für erdlose Kulturen im Freien oder in Treibhäusern auf von Erden gesonderten Substraten, dadurch gekennzeichnet daß die Matten, die bestehend aus Kokostorf, zusammengepreßt gelierfert werden, als Substrat eingesetzt werden.

2. Wachstummatte bestehend aus Kokostorf für Verwendung in erdlosen Kulturen, nach Anspruch 1, dadurch gekennzeichnet daß sie als Matten mit einem Druck von 75-125 kg/cm² mit Maßen 97 x 20 x 1 cm im trockenem Zustand gepreßt, geliefert werden und daß sie die endgültige Abmessungen von 105 x 22 x 5,5 cm im ausgedehnten Stand aufnimmt.

3. Wachstummatte nach Anspruch 2, dadurch gekennzeichnet daß sie in einer gefalteten Polyethylenfolien eingepackt wird, die nach der Quelle des Kokostorfes starr wird.

4. Wachstummatte nach Anspruch 2, dadurch gekennzeichnet daß sie ein spezifisches Gewicht von 500-600 g/Liter hat, was 15 - 20 g Wasser/100 g trockenes Material entspricht.

5. Verfahren zur Herstellung einer Kokosmatte nach Anspruch 2, dadruch gekennzeichnet daß das Basismaterial des Kokostorfes im trockenen Zustand gesiebt wird, der Rückstand, welcher größer als 0,5 mm ist, mit 2 kg Kalk/m³ gemischt wird und eine bestimmte Menge dieser Mischung dann in eine Form geleert wird, in der die Mischung mit einem Druck von 75-125 kg/cm² zu einer Matte mit den Maßen 97 x 20 x 1 cm gepreßt wird.

## Revendications

1. Méthode de culture hydroponique de plein air ou en serre sur des tapis de substrat qui sont maintenus séparés du sol, caractérisée en ce que les tapis de croissance constitués de films de tourbe de coco, qui sont livrés sous forme comprimée, sont utilisés comme tapis de substrat.

2. Tapis de croissance constitué de feuilles de tourbe de coco pour utilisation en culture hydroponique, selon la revendication 1, caractérisé en ce qu'il est livré en tant que tapis de substrat sous forme comprimée sous une pression de 75-125 kg/cm², avec des dimensions de 97 x 20 x 1 cm à l'état sec et en ce qu'il a des dimensions de 105 x 22 x 5,5 cm à l'état expansé.

3. Tapis de croissance, selon la revendication 2, qui est caractérisé par le fait qu'il est emballé dans une feuille de polyéthylène repliée qui se raidit lors de l'expansion de la tourbe de coco.

4. Tapis de croissance, selon la revendication 2 ou 3, qui est caractérisé par le fait qu'il possède un volume de 500-600 g/litre pour une teneur en humidité de 15 à 20 g d'eau/100 g de substance sèche.

5. Procédé pour produire un tapis de tourbe de coco selon la revendication 2, caractérisé en ce que le matériau de base de la tourbe de coco est tamisé à sec, le résidu retenu par le tamis est supérieur à 0,5 mm, ce résidu est mélangé avec 2 kg de chaux/m³ et une quantité spécifique de ce mélange est vidée dans un moule dans lequel elle est comprimée sous une pression de 75-125 kg/cm² en feuilles mesurant 97 x 20 x 1 cm.
